# EUROPEAN PATENT APPLICATION

(11) **EP 1 184 086 A2**
(43) Date of publication of application: **06.03.2002**
(21) Application number: 01307483.6
(22) Date of filing: 03.09.2001
(51) Int. Cl.: B05B 15/12

(54) **Recycle system of aqueous paint**

(30) Priority: 04.09.2000 JP 2000267340
(71) Applicant: Nippon Paint Co., Ltd., Osaka-shi Osaka-fu (JP)
(72) Inventor: Yamane, Tusyoshi, Sakai-shi, Osaka-fu (JP); Sueyoshi, Junichi, Otokuni-gun, Kyoto-fu (JP); Ohtsu, Takahito, Higashiosaka-shi, Osaka-fu (JP)
(74) Representative: Perry, Robert Edward

(57) **Abstract**

The present invention is to provide a recycle system of aqueous paint, wherein material balance is kept by controlling liquid amount within the recycle system when spray-coating. The system comprises:
coating an article (50) to be coated with an aqueous paint in a water-curtain-type coating booth (1),
collecting an over-spray paint that does not adhere with the article by water-curtain (3),
sending the collected solution to a condensation bath (7) through a booth circulation water bath (6),
separating it by a ultrafiltration apparatus (9) into condensed paint and filtrate, the condensed paint being transferred to a paint tank (12), and
taking the condensed paint out of the paint tank if necessary to adjust, followed by coating it as an aqueous paint,
wherein a total amount of liquid present within the recycle system is controlled constant during spray-coating.

## Description

### FIELD OF THE INVENTION

The present invention relates to a method for controlling a recycle system of aqueous paint in order to stably repeat a cycle in which aqueous paint is coated, collected and re-used.

### BACKGROUND OF THE INVENTION

An aqueous paint has widely been used for coating industrial products. An aqueous paint is especially noted from the point of re-use of resource without paint waste, because over-sprayed paint, i.e. aqueous paint that does not adhere with an article to be coated during coating is collected with water, filtered and condensed, followed by re-using it as paint. The paint also tends to be more widely used by the reasons that a filtrate of the paint is water, and that the paint is easily handled without any problem, such as air pollution, in comparison with one using organic solvent.

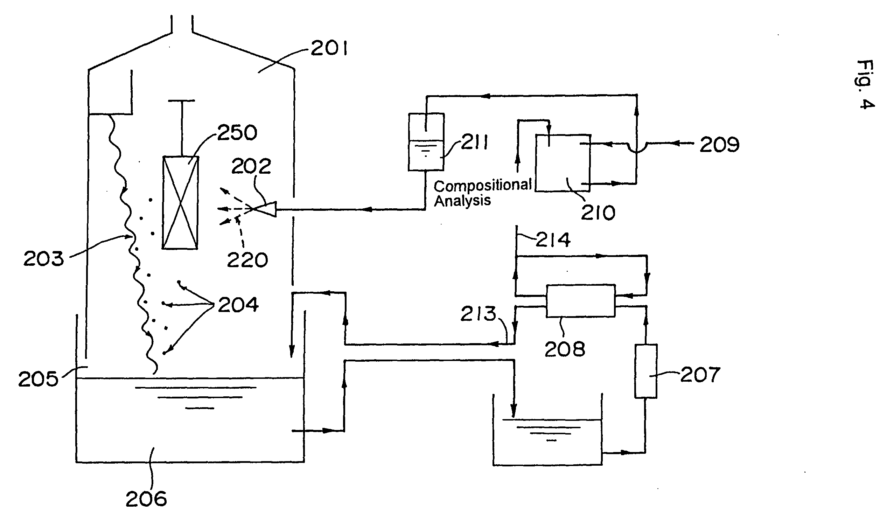

A recycling system of an aqueous paint currently used is proposed in, for example, Japanese Kokai Publication Hei 5 (1993) - 228422, of which a schematic view is shown in Fig. 4. In Fig. 4, when an article to be coated 250 is coated with an aqueous paint 220 sprayed from a coating-gun 202 in a spray coating room 201, an over-sprayed paint 204 that does not adhere on the article is collected by water-curtain 203 formed from aqueous rinsing liquid. Liquid containing the collected paint is partially sent to a ultrafiltration apparatus 208 through a prefilter 207 to separate it into filtrate 213 and condensed paint 214. The filtrate 213 is used again as aqueous rinsing liquid. The condensed paint is subjected to condensation several times by the ultrafiltration apparatus 208. A small portion of the condensed paint 214 is sampled and subjected to compositional analysis to obtain by calculation an amount of each component to be supplied for forming recycle paint, so that a supplement paint 209 is separately formed. The condensed paint 214 is then mixed with the supplement paint 209 in a supplement apparatus 210 to form an aqueous paint 211 for recycle use which is spray coated on another article.

After a certain period of operation of the above-mentioned recycle system, aqueous paint that has not been coated on the articles during coating operation and that spreads out to adhere onto a wall surface of the coating booth etc. are eventually dried and solidified so as to become floating matter or impurity. In order to remove the floating matter and impurity in the recycle system, the coating booth is cleaned by water or booth circulating water 206 when coating operation is stopped. The cleaning, in turn, significantly increases amount of the booth circulating water 206 and results in extending a period of time for the subsequent separation and condensation steps. If the amount of the booth circulating water 206 is too small, the floating matter and impurity is insufficiently removed and causes plugging of the prefilter 207 and the ultrafiltration apparatus 208.

In the above mentioned Japanese Kokai Publication Hei 5 (1993) - 228422, the preparation of the supplement paint 209 supplements the removed components as floating matter or impurity and supplies water and low molecular weight volatile materials. The preparation of the supplement paint 209 is conducted by a compositional analysis of the condensed paint 214 and a calculation of supplementing an amount of each component from the result of the analysis. The supplementing amounts obtained by the analysis does not make effective use of the sources of paint and it takes a relatively long time for preparing a recycle paint. In addition, this method does not control a liquid amount of cleaning liquid and paint and therefore does not keep material balance throughout the system.

### OBJECT OF THE INVENTION

The present invention is to provide a recycle system of aqueous paint, wherein material balance is kept by integrally controlling liquid amount within the recycle system when spray-coating.

The present invention also provides a recycle system of aqueous paint, which is simply conducted without compositional analysis or calculation of supplemental amounts of components from the condensed paint that has been collected from the recycle system. Accordingly, the present invention provides a recycle system that can easily obtain a recycled paint having a constant paint composition without a compositional analysis.

### SUMMARY OF THE INVENTION

The present inventors have found that the above-mentioned problems have been overcome by keeping material balance by way of controlling volume of each liquid derived from aqueous paint and booth circulation water moving within the system.

That is, the present invention provides with a recycle system of aqueous paint comprising:
coating an article to be coated with an aqueous paint in a water-curtain-type coating booth,
collecting an over-spray paint that does not adhere with the article by water-curtain,
sending the collected solution to a condensation bath through a booth circulation water bath,
separating it by a ultrafiltration apparatus into condensed paint and filtrate, the condensed paint being transferred to a paint tank, and
taking the condensed paint out of the paint tank if necessary to adjust, followed by coating it as an aqueous paint,
wherein a total amount of liquid present within the recycle system is controlled constant during spray-coating.

In the recycling system of the present invention, the term "liquid amount" means a volume amount of liquid present in the recycle system, for example volume amount of booth circulation water, volume amount of filtrate, volume amount of collected liquid in the condensation bath and volume amount of condensed paint in the paint tank and the like, as well as volume amount of liquid present in pipe line in the system.

In the present invention, a total amount of liquid present within the recycle system should be controlled constant during spray-coating. This is achieved by that a total of a volume (Vw) of the booth circulation water, a volume (Vx) of the filtrate, a volume (Vy) of the collected solution in the condensation bath, and a volume (Vz) of the condensed paint in the paint tank, that is (Vw+Vx+Vy+Vz), is kept constant. In addition, in case where the system further comprises a settling tank for storing the booth circulation water and a rinse tank for storing filtrate taking out of the filtrate bath, the present invention can also be achieved by that a total of a volume (Vw) of the booth circulation water, a volume (Vx) of the filtrate, a volume (Vy) of the collected solution in the condensation bath, a volume (Vz) of the condensed paint in the paint tank, a volume (Vs) of the booth circulation water in the settling tank and a volume (Vt) of the filtrate in the rinse tank, that is (Vw+Vx+Vy+Vz+Vs+Vt), is kept constant.

### BRIEF DESCRIPTION OF THE DRAWINGS

Figure 1 is a schematic view that shows one example of the recycling system of aqueous paint according to the present invention.

Figure 2 is a schematic view that shows another example of the recycling system of aqueous paint according to the present invention.

Figure 3 is a flow chart for controlling operation in the recycle system of the present invention.

Figure 4 is a schematic view that shows a conventional recycling system of aqueous paint.

### DETAILED DESCRIPTION OF THE INVENTION

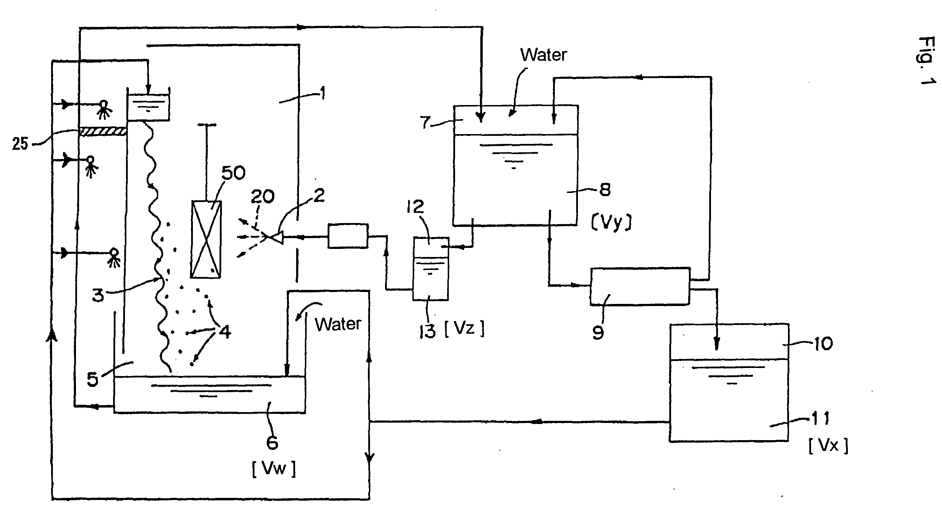

In the recycle system of the present invention as shown in Fig. 1, an aqueous paint 20 is spray-coated on an article 50 to be coated by a coating gun 2 in a water-curtain-type coating booth 1 and an over-spray paint 4 that has not been applied on the article 50 is collected by water curtain 3 containing a booth circulation water 6. The collected paint is sent to a condensation bath 7 as a collected liquid 8 through a booth circulation bath 5.

The collected liquid 8 is optionally sent to a ultrafiltration apparatus 9 to separate it to filtrate 11 and the remaining liquid is returned to the condensation bath 7 and repeatedly subjected to condensation by the ultrafiltration apparatus 9 to condense to form condensed paint 13. The condensed paint 13 is transferred to a paint tank 12 and stored therein.

The filtrate 11 having been separated is stored in a filtrate bath 10. The condensed paint 13 stored in the paint tank 12 is suitably adjusted to form an aqueous paint for coating, which is spray-coated again in the water-curtain-type coating booth.

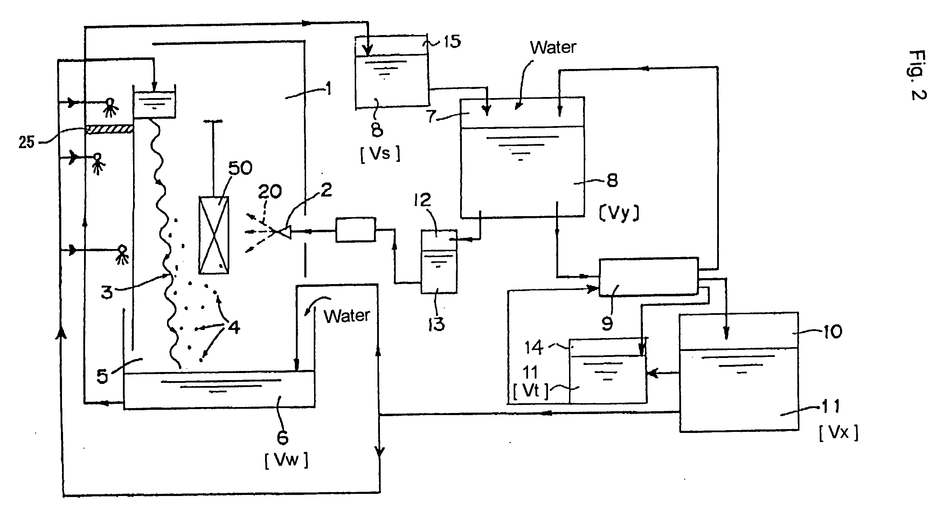

In the other example of the recycle system of the present invention as shown in Fig. 2, a settling tank 15 for storing the collected liquid 8 or booth circulation water 6 is present between the condensation bath 7 and the booth circulation bath 5. In addition, a rinse tank 14 for storing a portion of the filtrate 11 to rinse the ultrafiltration apparatus 9 is present attached to the ultrafiltration apparatus 9, and also connected with the filtrate bath 10.

According to the present invention, material balance of liquid in the recycle system should be kept constant during coating operation. That is, a total volume of liquid present in the recycle system as shown in Fig. 1 is kept constant during coating operation. This is achieved by that a total of a volume (Vw) of the booth circulation water, a volume (Vx) of the filtrate, a volume (Vy) of the collected solution in the condensation bath, and a volume (Vz) of the condensed paint in the paint tank, that is (Vw+Vx+Vy+Vz), is kept constant. In addition, in case where the system further comprises a settling tank for storing the booth circulation water and a rinse tank for storing filtrate taking out of the filtrate bath, the present invention can also be achieved by that a total of a volume (Vw) of the booth circulation water, a volume (Vx) of the filtrate, a volume (Vy) of the collected solution in the condensation bath, a volume (Vz) of the condensed paint in the paint tank, a volume (Vs) of the booth circulation water in the settling tank and a volume (Vt) of the filtrate in the rinse tank, that is (Vw+Vx+Vy+Vz+Vs+Vt), is kept constant.

A few preferred embodiments are hereinafter explained.

### Embodiment 1

In one embodiment of the present invention, when spray-coating is stopped after operating the system for a certain period of time, a portion of filtrate is sent to the coating booth 1 from the filtrate bath 10 to clean the inside of the coating booth 1. After cleaning the coating booth 1, the booth circulation water 6 in the booth circulation bath 5 is sent to the condensation bath 7 and then spray-coating will re-start. When the filtrate 11 is sent to the coating booth 1, it may be sent to either the booth circulation bath 5 or a booth cleaning pipe. When cleaning the coating booth 1, all of walls inside the coating booth 1 are cleaned, in addition to the usual cleaning with the water curtain 3.

In the embodiment 1, a total of a volume (Vw) of the booth circulation water 6, a volume (Vx) of the filtrate 11 in the filtrate bath, a volume (Vy) of the collected solution 8 in the condensation bath 7, and a volume (Vz) of the condensed paint 13 in the paint tank 12, that is (Vw+Vx+Vy+Vz), is kept constant. In case where the second example of Fig. 2, the liquid volume (Vs) of the settling tank 15 and the liquid volume (Vt) of the rinse tank 14 should also be added to the above total.

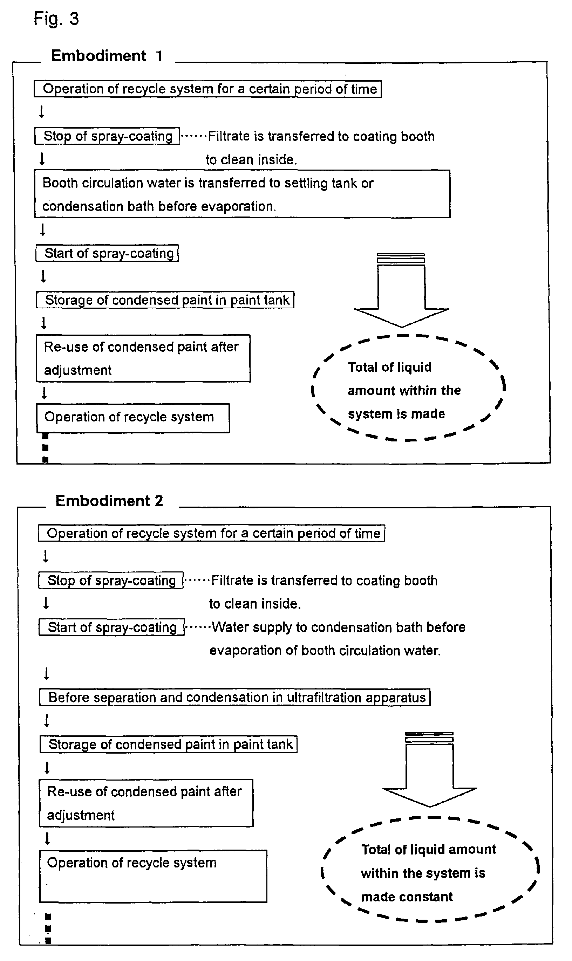

In Fig. 3, a flow chart is described. For example, the aqueous paint 20 has a solid content of 30 to 60 % by weight and is spray-coated in a certain period of time. When stopping the spray-coating, a certain amount of the filtrate 11 is sent to the coating booth 1. The booth circulation water 6 increases in amount by the filtrate 11 and is employed for water curtain 3 to clean inside the coating booth 1 and then sent to the condensation bath 7, followed by re-starting spray-coating the booth 1.

After starting the spray coating and before or during generating a small amount of the evaporation of the booth circulation water 6 in the booth circulation bath 5, the booth circulation water 6 is sent to the condensation bath 7 as same amount as the filtrate sending to the coating booth 1. Then, in order to compensate for the loss of the filtrate 11, the collected liquid 8 in the condensation bath 7 is sent to the ultrafiltration apparatus 9 to condense the collected liquid 8 to a non-volatile content of about 0.5 to 30 % by weight and to generate a certain amount of filtrate. The collected liquid is further subjected to condensation to obtain condensed paint 13 with a solid content of 25 to 60 % by weight. The condensed paint 13 is transferred to the paint tank 12 to store. The filtrate 11 is stored in the filtrate bath 10, but a portion of it is sent to a rinse tank 14 to store for rinsing the ultrafiltration apparatus 9.

The condensed paint is optionally taken out from the paint tank 12 and adjusted to re-use.

### Embodiment 2

In the second embodiment of the present invention, when the recycle system is operated in a certain period of time and then the spray-coating is stopped, a certain amount of the filtrate is sent from the filtrate bath 10 to the booth circulation bath 5 to clean inside the booth, followed by re-starting spray-coating. Thereafter, water is supplied thereto as the same amount as the loss of liquid of the booth circulation water 6 by vaporization or the like during coating operation to control the liquid amount of the system. In other words, the second embodiment is one wherein the loss of liquid within the system by coating operation is externally supplied with water to make the liquid amount constant.

In Embodiment 2, after a certain amount of the filtrate 11 is sent from the filtrate bath 10 to the booth circulation bath 5 as similar to Embodiment 1, spray-coating starts again. At this point, the booth circulation water 6 in the booth circulation bath 5 is present in an increased amount as same as the filtrate amount sent from the filtrate bath 10, but the total amount of liquid is unchanged.

However, water or other solvents are evaporated from the system to reduce its amount, when operating the system (such as spray coating with water curtain 3 of the booth circulation water 6). If the collected liquid is sent to the ultrafiltration apparatus 9 to separate and condense without supplementing liquid as similar to Embodiment 1, both the resulting condensed paint and filtrate are changed in composition. In other words, evaporation of water results in the reduction of the total amount of liquid and therefore a content of each component increases in relation thereto, thus the resulting condensed paint being outside the controlled range.

Accordingly, in Embodiment 2, water is supplied as the same amount as the loss of liquid amount by evaporation of liquid etc. into the condensation bath 7, before separating and condensing the collected liquid in the ultrafiltration apparatus 9. This is made material balance constant and keeps constant the compositional amount of the obtained condensed paint and filtrate. After supplying water to the condensation bath 7, the collected liquid 8 is separated and condensed in the ultrafiltration apparatus 9 to obtain the condensed paint 13, which is optionally adjusted to re-use as aqueous paint.

For example, the aqueous paint 20 has a solid content of 30 to 60 % by weight and is spray-coated in a certain period of time. When stopping the spray-coating, a certain amount of the filtrate 11 is sent to the booth circulation bath 5. The booth circulation water 6 increases in amount by the filtrate 11 and is employed for water curtain 3 to clean inside the coating booth 1, followed by re-starting spray-coating in the booth 1.

After re-starting the spray coating and before separating and condensing the collected liquid 8, water is added into the condensation bath 7 to control the total amount of (Vw+Vx+Vy+Vz+Vs+Vt) constant, in case where the total amount of liquid in the system is less than certain level. Then, separation and condensation are conducted in the apparatus 9. Thereafter, the collected liquid 8 in the condensation bath 7 is sent to the ultrafiltration apparatus 9 to condense the collected liquid 8 to a non-volatile content of about 40 to 60 % by weight and to generate a certain amount of filtrate. The condensed paint 13 is transferred to the paint tank 12 to store. The filtrate 11 is stored in the filtrate bath 10, but a portion of it is sent to a rinse tank 14 to store for rinsing the ultrafiltration apparatus 9.

According to the present invention, the total liquid volume is made constant, so that water is supplied within the system for compensating loss of liquid in the system by vaporizing or carrying out with applied paint. The supply of water may be conducted at whatever portion within the system, but it generally is supplied in the booth circulation water when re-starting coating, in addition to or in replace with the water supply at the portion of the condensation bath 7 before separating it in the ultrafiltration apparatus 9, as explained in Embodiment 2.

The water supply into the booth circulation water 6 can be conducted by a water level sensor equipped with the booth circulation bath 5 and a water supply apparatus functioned with the water level sensor. For example, when re-starting coating, a water level (liquid level) is lowered by evaporation or carry-out with coated articles and supplied with water by the function of the water level sensor and the water supply apparatus until the water level is retrieved. As the result, the material balance within the system is made constant by the water supply.

The supply of water into the booth circulation water 6 not only inhibits the significant loss of liquid amount of the booth circulation water 6 in the booth circulation bath 5, but also ensures sufficient water amount for water curtain 3. This inhibits generation of floating materials or impurities in the booth circulation water 6 and shortens a period of time for separating and condensing in the ultrafiltration apparatus 9, which enhances recycle efficiency of the recycle system.

According to the present invention, the condensed paint 13 is adjusted with either a new aqueous paint or a liquid mixture of volatile components contained in the aqueous paint or the both to form recycled aqueous paint. The aqueous paint used in the present invention generally comprises non-volatile components (such as binder resin, pigment, additives and the like), small amount of volatile components (such as solvent other water, auxiliary (e.g. surfactant) and the like) and water.

In the prior art method, the condensed paint is subjected to compositional analysis, and necessary compositional amounts are calculated therefrom for adjusting recycled paint. This method generally takes a quite long time and ineffective. In the present invention, however, it is very simple that water is added and non-volatile components are supplemented in the form of paint composition to form recycled aqueous paint. This is because the condensed paint formed by ultrafiltlation contains necessary components in quite sufficient amounts and if water occupying large amount of aqueous paint is added thereto, there may be no need of adjustment of small amounts of volatile components.

In the present invention, the time-consuming adjustment in the prior art technique is not necessary. Instead, water or new paint is added to the condensed paint without any calculation of composition, in simple notice of total liquid amount in the system, to result in obtaining recycled aqueous paint.

The equipment and device employed in the recycle system of the present invention (e.g. water-curtain-type coating booth 1, spray gun 2, booth circulation water 6, filtrate bath 10, paint tank 12, ultrafiltration apparatus 9 and the like) are not limited and can be those that have been used in conventional aqueous paint coating systems.

In the present invention, water is used for the system and aqueous paint. The water is generally ion-exchanged water or purified water for preventing immixture of foreign matters into the system.

According to the present invention, the material balance within the recycle system is controlled by a simple method wherein liquid amount in the system is merely monitored and the loss of the liquid amount is supplied with mainly water that is sometimes admixed with aqueous paint or other organic solvents. This method makes the control of the system easy and does not always necessitate the compositional analysis that has been used for adjusting condensed paint to recycled usable aqueous paint.

## Claims

1. A recycle system of aqueous paint comprising:
coating an article to be coated with an aqueous paint in a water-curtain-type coating booth,
collecting an over-spray paint that does not adhere with the article by water-curtain,
sending the collected solution to a condensation bath through a booth circulation water bath,
separating it by a ultrafiltration apparatus into condensed paint and filtrate, the condensed paint being transferred to a paint tank, and
taking the condensed paint out of the paint tank if necessary to adjust, followed by coating it as an aqueous paint,
wherein a total amount of liquid present within the recycle system is controlled constant during spray-coating.

2. The recycling system of aqueous paint according to claim 1 wherein a total of a volume (Vw) of the booth circulation water, a volume (Vx) of the filtrate, a volume (Vy) of the collected solution in the condensation bath, and a volume (Vz) of the condensed paint in the paint tank, that is (Vw+Vx+Vy+Vz), is kept constant.

3. The recycling system of aqueous paint according to claim 1, wherein, in case where the system further comprises a settling tank for storing the booth circulation water and a rinse tank for storing filtrate taking out of the filtrate bath, a total of a volume (Vw) of the booth circulation water, a volume (Vx) of the filtrate, a volume (Vy) of the collected solution in the condensation bath, a volume (Vz) of the condensed paint in the paint tank, a volume (Vs) of the booth circulation water in the settling tank and a volume (Vt) of the filtrate in the rinse tank, that is (Vw+Vx+Vy+Vz+Vs+Vt), is kept constant.

4. The recycle system of aqueous paint according to claim 1, wherein after operating the recycle system a certain period of time and stopping spray-coating, a necessary amount of the filtrate for cleaning the coating booth is sent from the filtrate bath to the spray-coating booth to clean inside the coating booth, and then sent to the condensation bath, followed by re-starting spray-coating, thus keeping the liquid content of the recycle system constant.

5. The recycle system of aqueous paint according to claim 1, wherein after operating the recycle system a certain period of time and stopping spray-coating, a necessary amount of the filtrate for cleaning the coating booth is sent from the filtrate bath to the spray-coating booth to clean inside the coating booth, and then spray-coating re-starts, followed by supplying water into the condensation bath, thus keeping the liquid content of the recycle system constant.

6. The recycle system of aqueous paint according to anyone of claims 1 to 5, wherein the condensed paint is adjusted by adding another aqueous paint and volatile component and re-used as aqueous paint.
